Europäisches Patentamt

European Patent Office

Office européen des brevets

(11) Publication number: **0 256 876 B1**

# EUROPEAN PATENT SPECIFICATION

(45) Date of publication of patent specification: **03.08.94**  (51) Int. Cl.⁵: **C07F 7/16**

(21) Application number: **87307248.2**

(22) Date of filing: **17.08.87**

(54) **A process for preparing halosilanes.**

(30) Priority: **20.08.86 US 898472**

(43) Date of publication of application:
**24.02.88 Bulletin  88/08**

(45) Publication of the grant of the patent:
**03.08.94 Bulletin  94/31**

(84) Designated Contracting States:
**DE FR GB**

(56) References cited:
**DE-A- 1 668 819**
**DE-C- 970 341**
**FR-A- 1 051 863**
**US-A- 4 044 109**

(73) Proprietor: **DOW CORNING CORPORATION**

**Midland Michigan 48640(US)**

(72) Inventor: **Williamson, Oliver Rae**
**2908 Homewood Place**
**Louisville Kentucky(US)**
Inventor: **Strange, William Terry**
**306 Laurel Lane**
**Madison Indiana(US)**
Inventor: **Fritze, Sherrie Rosalie**
**315 Park Avenue**
**Carrollton Kentucky(US)**
Inventor: **Lanthier, Christopher Paul**
**2612 Franks Drive**
**Madison Indiana(US)**

(74) Representative: **Laredo, Jack Joseph et al**
**Elkington and Fife**
**Prospect House**
**8 Pembroke Road**
**Sevenoaks, Kent TN13 1XR (GB)**

**Description**

The instant invention relates to a process for the preparation of organohalosilanes from the direct reaction of an organic halide and silicon. More specifically the instant invention relates to a process in which the performance of the reaction system is enhanced by the addition of an inert solid to the contact mass of silicon and appropriate catalytic additives. The benefit derived from the use of the instant invention is increased control over the temperature in the reaction zone of a fluid bed reactor in which organohalosilanes are produced by the direct reaction of halosilanes or organohalosilanes and silicon. This benefit of greater control over reaction temperature subsequently results in better control of the product distribution of the crude product to yield the desired products and improved utilization of the silicon raw material. These forementioned benefits result in overall improved utilization of raw materials and more economical manufacture of the desired halosilane and organohalosilane intermediates.

Organohalosilanes are well known reactive chemical intermediates used extensively in the silicones industry.

Organohalosilanes are produced primarily by the direct reaction of silicon with the corresponding organic halide. Hereafter in this application, the term "the direct reaction" will refer to the reaction of silicon with an organic halide.

The direct reaction to form organohalosilanes was first disclosed by Rochow and his co-workers, beginning in the mid-1940's.

The reaction of an organic halide with silicon is extremely exothermic. Much effort has been expended during the development of the direct reaction to handle the resultant heat of reaction and the potentially detrimental effects upon reactor performance and raw material utilization. For the direct reaction to organohalosilanes, workers have recognized that temperature control is critical to maximizing the content of the desirable diorganodihalosilanes, reducing the output of both lower-boiling and higher-boiling non-usable silanes, and reducing the fouling of the reactive silicon solids by carbon deposition.

In the modern manufacture of silicones diorganodihalosilanes, dimethyldichlorosilane in particular, constitute the bulk of the silane intermediates that are processed to produce the siloxane intermediates that are utilized in most silicone products.

When one considers that hundreds of millions of pounds of silanes are produced annually worldwide to support the commercial manufacturing of silicones and semiconductor silicon, it can be appreciated that even small increments of improvement in selectivity in crude product distribution and of improvement in raw material efficiency have a significant impact upon these manufacturers. As an example, assuming a manufacturer produces ten million pounds of dimethyldichlorosilane annually, a two to four weight percent reduction in the silicon raw material requirement would have a significant economic impact and would be quite attractive to the manufacturer.

Sprung and Gilliam in U.S. 2,380,999, issued August 7, 1945, disclose the use of an inert gas such as nitrogen mixed with an alkyl halide to better control the temperature of the direct reaction of the alkyl halide with silicon. The use of an inert gas as compared to the instant invention in which an inert solid is used suffers from the disadvantage of difficulties in condensing and recovering the volatile reaction products and the unreacted organic halide in the presence of the inert gas.

Reed et al., in U.S. 2,389,931, issued November 27, 1945, disclose a reactor system in which a mixture of silicon and a metal catalyst are contacted with a hydrocarbon compound in a violently agitated, fluidized state. In the reactor system disclosed by Reed et al., organosilicon compounds are prepared by reacting a hydrocarbon compound with a powdered mixture of silicon and a metal catalyst. The powder is carried by the hydrocarbon compound into a hot reaction zone in which the gaseous reactants (and subsequently formed products) and the powdered reactants are in a violently agitated, fluidized state. The fluidized reaction mass facilitates the removal of heat generated by the reaction exotherm and subsequent control of temperature in the reaction zone. In the disclosed reaction scheme of Reed et. al., the unreacted silicon and metal catalyst are physically removed from the reaction zone by the reactant/product gases. The solids are removed from the gases, cooled, and returned to the reactor. The temperature of the reaction zone of this closed loop reactor is controlled by the temperature of the recycled and fresh solids fed to the reaction zone. In most fluid bed reactor systems used commercially today, as will be described infra, the reactors are designed so that the solids remain in the reactor in a fluidized state; and cooling is effected by external means, such as a jacket on the reactor or internal heat transfer coil. The fluidized state of the reaction solids and gaseous reactants are still keys to effective heat transfer. Reed et al., define the terms "powdered silicon" or "silicon powder" to include pure silicon or a powdered mixture, or alloy, of silicon and a catalyst or solid diluent. No further mention of the solid diluent is made explicitly or in an example. It, therefore, must be implied that there is no difference between the behaviour of the reaction system with or without the solid diluent. To imply otherwise would be pure speculation. Thus, the implied use of a solid diluent by Reed et. al., provides no benefit as opposed to the beneficial results of the inert solids as taught in the instant invention, as will be described infra.

Dotson in U.S. 3,133,109, issued May 12, 1964; Shade in U.S. 4,281,149, issued July 28, 1981; and Shah and Ritzer in U.S. 4,307,242, issued December 22, 1981, all disclose methods of treating the silicon/catalyst reaction mass to reduce the problems associated with fouling of the solid surface of the reactive silicon or the build-up of impurities in the reaction mass to reduce the detrimental effects upon the reaction and to prolong the life of the reaction mass and to maximize silicon utilization. All three of these disclosures suffer from the need to remove solids during reaction, treatment off-line, and return of the solids to the reaction zone.

Ikeda et al., in Japanese Patent 766,967, Japanese Patent Publication No. 27,263/74, published April 26, 1975, disclose a process for the fluidization of a solid catalyst mixture which is used in the reaction of propylene with ammonia to obtain acryl nitrile. In the process disclosed by Ikeda et al., an inert powder material is added to a solid catalyst. The inert powder material is glass beads, and the solid catalyst is a phosphorous/molybdenum/bismuth-containing silica carrier catalyst. The disclosure of Ikeda et al., neither demonstrates nor suggests the instant invention. To conclude otherwise would be pure speculation.

Kotzsch et al., in U.S. 4,044,109, issued August 23, 1977, disclose improvement in the direction reaction of hydrogen chloride and silicon to chlorosilanes in which an iron compound is added to the silicon solids in a fluid bed reactor. The disclosure teaches that the presence of the iron compound reduces the temperature gradient in the fluidized bed of solids and faciliates control of the ratio of trichlorosilane and silicon tetrachloride in the crude reaction product. Iron (II) chloride, $FeCl_2$, is used as the iron compound in the examples presented by Kotzsch et al. It was found in the development of the instant invention that the presence of $FeCl_2$ in the silicon/metal catalyst reaction mass in the direct reaction to organohalosilanes has a significantly detrimental effect upon the product distribution of the resultant crude organohalosilane product. The detrimental effect of $FeCl_2$ upon the direct reaction to organohalosilanes is demonstrated in an example, infra. The instant invention discloses use of an inert solid which improves the performance in a fluid bed reactor of the direct reaction to either halosilanes or organohalosilanes while the disclosure of Kotzsch et al., cannot be applied to the direct reaction to organohalosilanes.

Jones et al., in U.S. 4,225,531, issued September 30, 1980, disclose an invention in which the addition of fluidization promoters, such as particulate carbon, improves the quality of fluidization of a Fischer-Tropsch catalyst. Jones et al., broadly claim a process where solid particles of a "selected catalyst material" are maintained as a fluidized bed and are used to catalyze a "selected chemical reaction" wherein the method of improving the quality of fluidization comprises admixing and fluidizing with said solid particles a solid fluidization promoter which is substantially inert with respect to said reaction and does not reduce the activity of the catalyst. Jones et al., only provide examples of this invention applied to use of a Fischer-Tropsch catalyst. Applicants submit that the disclosure of Jones et al., is non-enabling as regards other catalyst/chemical reaction systems. The disclosure of Jones et al., is an invitation to further experimentation to apply their invention. The successful application of this invention to the direct reaction of a halogen-containing material with silicon would be a matter of pure speculation. From the disclosure of Jones et al., carbon is a suitable promoter for iron catalysts in a Fischer-Tropsch synthesis reaction. However, Jones et al., teach that silica gel, sand, and alumina are not inert to Fischer-Tropsch synthesis reactions. Jones et al., teach away from the use of sand as an inert solid.

Ward et al., in U.S. 4,554,370, issued November 19, 1985, disclose the use of fume silica as an additive to the direct reaction to alkylhalosilanes. However, the fume silica is added as a minor constituent at approximately 0.001 to 0.2 weight percent of the copper-silicon contact mass. Further, the purpose of the fume silica is to reduce agglomeration of solids in the contact mass caused by the use of cuprous chloride. As will be shown, infra, the instant invention utilizes between 5 and 40 weight percent of an inert solid in the contact mass.

The present commercial application to produce organohalosilanes via the direct reaction is primarily carried out in fluid bed reactors. As noted in the discussion of the patent of Reed et al., supra, the fluid bed reactor is intended to facilitate intimate mixing of powdered silicon solids and the reactant halogen-containing compound and subsequent control of temperature in the reaction zone. While fluid bed operation previous to the instant invention with the direct reaction does moderate temperature in the reaction zone, there are yet shortcomings that exist. Among these shortcomings are the fact that as the run progresses, the particle size distribution and nature of the solids in the bed change and the quality or uniformity of fluidization is not stable. This lack of stability of fluidization can result in hot spots and undesirable temperature gradients within the reaction zone. The undesirable temperature gradients hinder effective heat transfer and result in temperatures within the reaction zone that are higher than desirable to maximize the desired distribution of products in the crude reaction mixture and the subsequent overall raw material efficiencies.

A second shortcoming of present fluid bed reactors used to carry out the direct reaction is the loss of usable silicon because of the semi-continuous nature of the reaction. An initial charge of silicon, copper, and other catalytic additives are charged to the reactor. Silicon and a hydrogen halide or an organic halide are continuously fed to the reactor while the desired product distribution in the crude reactor product and desired production rate are maintained. When either desired product distribution or desired production rate are no longer maintained, the reactor run is terminated and the solids remaining in the reactor are, discarded. During the course of the reaction, silicon is continually being reacted to volatile products and as such leaves the reaction zone. Fresh silicon is continuously added to replace the silicon leaving in the volatile product. Copper and the catalytic additives do not leave the reaction zone nor do most of the metallic impurities that are introduced with the fresh silicon. As a consequence, this build-up of metallic impurities and a build-up of residues from the decomposition of the reactant organic halides in the case of the organohalosilane reaction cause a detrimental effect upon the product distribution and raw material efficiency. At a point in the life of a reaction bed, the system must be shut down and the spent bed must be discarded. The discarding of the spent bed can account for as much as 10 weight percent or more of the total silicon fed to the fluid bed reactor.

It has been unexpectedly found that the forementioned shortcomings of the present fluid bed reactors used in the direct reaction of silicon and an organic halide are minimized by using an inert solid such as sand, along with silicon and appropriate catalysts and additives, in the solid contact mass. As noted, supra, the degree of or quality of the fluidization of the solid and gaseous reactant is a key to efficient heat transfer and temperature control in a fluid bed reactor. It has been found unexpectedly that adding as little as 5 weight percent of an inert solid such as sand to a bed of silicon and catalyst solids allows control of the temperature throughout the bed of solids to a very satisfactory range of approximately plus or minus 5°C. of the desired reaction temperature.

A further unexpected finding was the ability to react out a maximum amount of silicon, as much as 20 weight percent or more of the presently discarded quantity, from the solids remaining in the reactor before the solids are discarded. As noted, supra, the silicon discarded in the solids, prior to the instant invention, accounted for as much as 10 weight percent or more of the total silicon fed during the course of the reaction. Prior to the instant invention, the ability to react out the silicon remaining in the reactor was severely limited by temperature control. Beginning with a full bed of solids, in the case of the direct reaction to produce organohalosilanes, as the organic halide was fed and the bed began to become depleted, temperature control became very difficult, in some cases so much so that temperatures that deviated by as much as 100°C. from the desired temperature to maintain the desired product distribution in the crude product were noted. A product distribution high in content of undesirable silanes, caused by these erratic temperatures, has been a disincentive to react out the silicon left in the reactor solids; thus, as much as 10 weight percent or more loss of total silicon. The addition of sand or a comparable inert solid to the reactor solids initially or additionally during the final reacting out of silicon from the reactor bed will result in effective temperature control to allow maximum reaction of silicon from the reactor bed before discarding.

It is an objective of the instant invention to control the direct reaction to produce organohalosilanes to maximize the yields of diorganodihalosilanes, particularly dimethyldichlorosilane

It is a further objective of the instant invention to minimize the usage of silicon as a reactant in the direct reaction.

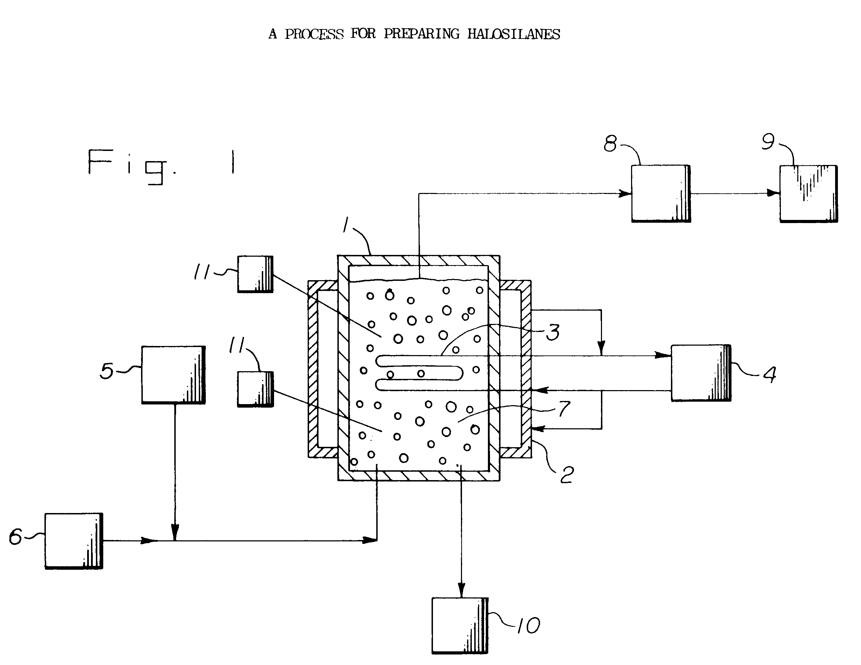

The instant invention will become better understood; by those skilled in the art from a consideration of the attached drawing. Figure 1 is a schematic representation of one configuration of a fluid bed reactor system in which the direct reaction is facilitated. Figure 1 is presented for illustrative purposes and is not to be construed as limiting the instant invention as delineated in the claims.

Figure 1 is a representation of one reactor system to effect the direct reaction of a hydrogen halide or an organic halide and silicon Starting with the reactor body 1, shown in cross-section, the reactor body is a cylindrical vessel, surrounded by a annular jacket 2, and fitted with an internal heat transfer coil 3. The reactor body 1, the jacket 2, and the internal heat transfer coil 3 can be typical of design of such reactors which are well-known in the art. The annular jacket 2 and the internal heat transfer coil 3 are coupled to a means 4 for circulating a liquid heat transfer medium and for heating or cooling the heat transfer medium. The liquid heat transfer medium is circulated through the jacket 2 and the heat transfer coil 3 to initially heat the reactor system and its contents to the desired reaction temperature, and then during the course of reaction to remove the heat of reaction of the direct reaction and to maintain the desired temperature in the reaction zone; the liquid heat transfer medium and the means 4 for circulating and heating or cooling said heat transfer medium are any of several systems well-known in the art. The initial charge of silicon, copper, other catalytic additives, and an inert solid are fed to the reactor body 1 from a feed hopper 5. Reactant silicon and other solids to be added during the course of the run are also charged from feed hopper 5. An inert gas for carrying the initial solids charge to the reactor or organic halide fed to the reactor, and used to carry make-up silicon, are fed by means 6 for feeding a gas. The bed of solids 7 which is maintained during the course of the run is a mixture of silicon, copper, other catalytic additives, and an inert solid. During the course of a run, the gaseous product silanes, unreacted organic halide, and some entrained fine solids are passed through a means 8 to remove the fine solids; the means to remove the fine solids can be such known means as a filter, a cyclone solid-gas separator, or the like. The gaseous product silanes and the unreacted organic halide are passed to a means 9 to separate the unreacted organic halide from the product silanes; this means 9 to separate the unreacted organic halide from the product silanes can be conventional means such as distillation or the like; the unreacted organic halide may be recycled to the reactor. A means 10 is provided to facilitate the removal and discarding of the spent solids from the reactor at the conclusion of a run; this means of solids removal and discard can be a conventional means such as gas pressure in conjunction with a gas lock valve or the like. The temperature of the solid reactant bed is monitored by temperature measuring means 11; these means 11 of temperature measurement can be conventional devices such as thermocouples or the like; these means of temperature measurement are spaced along the length of the reactor.

In accordance with the instant invention, there is provided a process to produce organohalosilanes under conditions that will be delineated herein. What is described, therefore, is a process for preparing organohalosilanes comprising effecting reaction between an organic halide and powdered silicon in the presence of an effective amount of copper-containing material and other catalytic additives in a fluid bed reactor in which the powdered silicon, the copper-containing material, and the other catalytic additives are mixed with a powdered, inert solid, said inert solid comprising at least 5 weight percent of combined solids, and said inert solid having a particle size distribution which is suitable for a fluid bed reactor.

With an organic halide the corresponding products are organohalosilanes, such as diorganodihalosilanes, organotrihalosilanes, triorganohalosilanes, and the like. The organic halide can be an alkyl halide such as methyl chloride, ethyl chloride, and the like. Likewise, the organic halide can be an aryl halide, such as chlorobenzene, and the like.

For the purposes of the instant invention, "copper-containing material" means elemental copper, in its many forms, and copper compounds.

For the purposes of the instant invention, "inert solid" means a powdered solid which, at the concentrations utilized in the solid reaction contact mass disclosed in the instant invention, does not alter the desired product distribution from the reaction of silicon with an organic halide.

The proportions and identity of the consitituents of the contact mass of silicon, copper-containing materials, and other catalytic additives can be any of those disclosed in disclosures related to the direct reaction. For example,, the basic disclosure on the direct reaction to produce organohalosilanes is that of Rochow in U.S. 2,380,995, issued August 7, 1945, in which Rochow discloses using silicon in combination with metallic catalysts such as copper, nickel, tin, antimony, manganese, silver, titanium, and the like. As a further example, Rochow and Gilliam in U.S. 2,383,818, issued August 28, 1945, disclose the use of oxides of copper in the contact mass with silicon. In another example, Gilliam in U.S. 2,464,033, issued March 8, 1949, discloses a solid reaction mass which comprises silicon, copper or copper halides or copper oxides, and zinc or zinc halides. As a final example, Ward et al., in U.S. 4,500,724, issued February 19, 1985, disclose the use of a solid reaction mass which is a combination of silicon in combination with copper or a copper compound, tin or a tin compound, and zinc or a zinc compound. Thus, an "effective amount of copper-containing material and other catalytic additives" can be any of those known in the art, as exemplified, supra.

The fluid bed reactor system to facilitate the reaction between the organic halide and silicon can be a system known in the art, such as described in Fig. 1, supra.

The particle-size distribution of the solids of the reaction or contact mass and the inert solids of the instant invention should be a particle-size distribution known in the art to be suitable for a fluid bed reactor. For example, Dotson in U.S. 3,133,109, issued May 12, 1964, discloses that for optimum results in the direct reaction of methyl chloride with silicon the particles in a fluidized bed should have an average particle size of from about 20 to 200 microns. As a further example, Ward et al., in U.S. 4,500,724, issued February 19, 1985, disclose that silicon present in a fluidized bed can have a particle size below 700 microns; with an average particle size greater than 20 microns and less than 300 microns; preferably with a mean diameter of 100 to 150 microns. It was found that inert solids with particle size distributions which ranged from approximately 20 to 450 microns were effective in facilitating the beneficial results of the instant invention.

The inert solid is effective in the range of 5 to 40 weight percent of the combined weight of the solids in the fluid bed reactor. The lower limit of 5 weight percent of inert solids in the combined weight of the solids in the fluid bed reactor is believed by the inventors of the instant invention to be the lower limit at which the inert solids would yield the beneficial effects of the instant invention. The upper limit of 40 weight percent is set based upon observations that the presence of the inert solids at loadings greater than 50 weight percent may have a detrimental impact upon the product distribution of the crude product from the fluid bed reactor.

The inert solid must be truly inert and must not alter the chemical reactions of the direct reaction, as do copper-containing materials and other catalytic additives such as iron compounds. The inert solid can be naturally-occurring silicon dioxide such as sand or ground quartz, oxides of metals such as titanium, and the like.

The preferred mode of carrying out the process of the instant invention is to use methyl chloride as the organic halide, the organohalosilanes are methylchlorosilanes.

The fluid bed reactor system can be configured as described in Fig. 1, supra.

The inert solid can be sand. The sand in the combined solids in the fluid bed reactor is in the range of 10 to 20 weight percent.

So that those skilled in the art may understand and appreciate the instant invention, the following examples are provided. These examples are presented to be illustrative of the instant invention and are not to be construed as limiting the instant invention delineated in the claims.

Example 1: (Not within the scope of the instant invention) Small laboratory reactor runs were made to compare the impact of the addition of $FeCl_2$ to the silicon/metal catalyst reaction mass upon the direct reaction of silicon and methyl chloride. In this test, commercial $FeCl_2$ powder was sieved; and the fraction that was less than 106 microns in diameter was utilized to approximate the particle size of the $FeCl_2$ utilized by Kotzsch et al., supra.

The laboratory reactor utilized was a vibrating bed reactor, a reactor similar to that described by Maas et al., in U.S. 4,218,387, issued August 19, 1980, and is familiar to those skilled in the art for producing methylchlorosilanes from silicon and methyl chloride. In general, the reaction is carried out by passing methyl chloride in vapor form through a powdered mixture of silicon and catalytic metals and additives. The combination of vibration of the bed and action of the gas agitates the powdered mixture and simulates the gas-solid contacting action in a fluid bed reactor. Before and during the reaction of methyl chloride and silicon the reactor and its contents are maintained at an elevated temperature in a heated sand bed.

The solid charge to the reactor was prepared by combining the powdered silicon, copper-containing material, other catalytic additives, and in the test runs $FeCl_2$ in a bottle, followed by shaking to mix the solids. The solids were then added to the reactor. The reactor was weighed before and after the reaction to determine the weight of solids that were consumed during the run. The reactors and solids were immersed in the heated sand bath. Gas flows to the reactor were begun. Gas flows and vibration of the reactor facilitated fluidization of the solids.

The products of the reaction and any unreacted methyl chloride were condensed and collected in cold traps immersed in a bath of isopropanol cooled by dry ice. The cold traps were weighed before and after the reaction to determine the weight of reactor effluent, product, and unreacted methyl chloride that was collected during the course of the run. The cooled, liquid reactor effluent was sampled and analyzed using gas chromatographic techniques.

Two runs were made, utilizing a standard mixture of silicon and catalytic additives. The first run was made without the addition of $FeCl_2$. A second run was made in which $FeCl_2$ was added to the silicon/metal catalyst reaction mass so that the reaction mass was approximately 10 weight percent iron. The two reactions were carried out with the vibrating bed reactor immersed in a sand bath that was maintained at a temperature of 316°C. Table 1 is a summary of the impact of the addition of $FeCl_2$ upon the direct reaction of silicon with methyl chloride. The two results that are used for comparison are: (a) percent silicon discarded, noted as "Si Disc" in Table 1; percent silicon discarded is defined as

$$\frac{\text{Weight silicon left in reactor}}{\text{Weight silicon fed}} \times 100;$$

and (b) percent usuble methylchlorosilane in the crude product, a measure of the selectivity of the reaction toward the desired product, noted in Table 1 as "%Usable". The sample without $FeCl_2$ is designated as Sample A; and the sample with $FeCl_2$ is designated as Sample B.

6

## Table 1

| Sample | Si Disc | %Usable |
|--------|---------|---------|
| A | 27.0 | 84.1 |
| B | 69.6 | 19.1 |

The above results demonstrate that the presence of iron ( as $FeCl_2$) at concentrations of 10 weight percent or more in the contact mass of the direct reaction of silicon and methyl chloride has very detrimental effects upon the content of the usable methylchlorosilanes in the crude reaction product.

Example 2: A third laboratory reactor run was made to compare the impact of the addition of sand on the direct reaction of methyl chloride with silicon. This laboratory run was carried out using the equipment and procedures of Example 1. The sand utilized was purchased from Ottawa Industrial Sand Company as Ottawa #295, also known as Sil-Co-sil. The sand had a median particle size of 21 microns. This third laboratory reactor run was made with sand added to the silicon/metal catalyst reaction mass so that the reaction mass was approximately 10 weight percent sand. As in Example 1, the results that are used for comparison are: (a) percent silicon discarded, noted as "Si Disc" in Table 2; and (b) percent usable methylchlorosilanes in the crude product, a measure of the selectivity of the reaction toward the desired product, noted in Table 2 as "%Usable". The definition of these terms is outlined in Example 1. The sample without sand is Sample A from Example 1. The sample in which sand was utilized is designated as Sample C.

## Table 2

| Sample | Si Disc | %Usable |
|--------|---------|---------|
| A | 27.0 | 84.1 |
| C | 36.0 | 88.7 |

The above results demonstrate that the addition of sand to the direct reaction of methyl chloride with silicon does not detrimentally effect the product distribution of the reaction product.

Example 3: The direct reaction of methyl chloride and silicon to produce methylchlorosilanes was carried out in a pilot fluid bed reactor designed to simulate the system shown in Fig. 1, supra. The direct reaction was first carried out without the addition of sand. The direct reaction was then carried out with the addition of sand.

Standard runs were carried out by charging a standard mixture of silicon, copper catalyst, and catalytic additives to the fluid bed reactor. Next fine quartz sand was added to a standard mixture of silicon, copper catalyst, and catalytic additives charged to the fluid bed reactor. The sand was added so that, in combination with the silicon, copper catalyst, and other catalytic additives, the concentration of sand ranged from 7 to 14 weight percent of the combined solids in the fluid bed reactor. The sand utilized was obtained from Ottawa Industrial Sand Company. The sand utilized had a median particle size which ranged from approximately 150 to 450 microns.

The fluid bed reactor was operated in a standard manner in which the methyl chloride was continuously fed to the reactor and products and unreacted methyl chloride continuously exit the reactor. Fresh silicon was fed to maintain the level of silicon in the fluid bed reactor.

A series of 23 runs was made using the pilot fluid bed reactor. These runs were monitored for silicon utilization or percent of total silicon fed that is discarded and product selectivity in the crude product. 17 runs were carred out using no sand. 6 runs were carried out with the addition of sand. The sand content in the fluid bed reactors in these latter 6 runs varied from 7 to 14 weight percent of the combined solids in the pilot fluid bed reactor. All 23 runs were monitored for (1) the proportion of the total silicon fed that was discarded from the reactor at the end of the run; and (2) the percent usable methylchlorosilanes in the crude product from the direct reaction.

The proportion of the total silicon fed that was discarded is based upon the weight of the silicon discarded from the reactor. The weight of silicon discarded from the reactor was calculated by starting with the weight of the bed of solids dumped from the reactor and subtracting the weight of copper and the weight of other catalysts added during the course of the run. The proportion of silicon discarded is

defined as

$$\underline{\frac{\text{Weight silicon left in reactor}}{\text{Weight silicon fed}}} \times 100.$$

The percent usable methylchlorosilanes in the crude product was determined by suing gas chromatographic analytical techniques.

The use of sand in the fluid bed reactor during the direct reaction reduced the proportion of total silicon fed that was discarded by approximately 30 percent, as compared to the standard runs in which sand was not utilized. At the same time the percent usable methylchlorosilanes remained at approximately 83 weight percent of the crude product for both runs without and with sand added to the standard mixture of solids in the fluid bed reactor.

These above results demonstrate that the addition of sand to the contact mass of silicon, copper-containing materials, and other catalytic additives in a fluid bed reactor in the preparation of methylchlorosilanes via the direct reaction of methyl chloride with silicon improves silicon utilization. Further, the usable methylchlorosilane content of the crude reaction product is essentially the same.

Example 4: The direct reaction of methyl chloride and silicon to produce methylchlorosilanes was carried out in a commercial-scale fluid bed reactor, similar to the system shown in Fig. 1, supra. The direct reaction was first carried out without the addition of sand, and then the direct reaction was carried out in the presence of sand.

In the first case, a standard mixture of silicon, copper catalyst, and catalytic additives was charged to the fluid bed reactor In the latter case, fine, quartz sand was added to the standard mixture of silicon, copper catalyst, and catalytic additives in the fluid bed reactor. The sand utilized was purchased from Ottawa Industrial Sand Company as Ottawa #295, also known as Sil-Co-sil. The sand had a median particle size of 21 microns.

The fluid bed reacto was operated in a standard manner in which the methyl chloride was continuously fed to the reactor and products and unreacted methyl chloride continuously exited the reactor. Fresh silicon was fed to maintain the level of silicon in the fluid bed reactor.

A series of 8 runs using the commercial-scale fluid bed reactor were monitored for silicon utilization or percent of total silicon fed that is discarded and for percent usable methylchlorosilanes in the crude product. 2 runs were carried out using no sand. 6 runs wer carried out with the addition of sand. The sand content of the solids in the fluid bed reactors in these latter 6 runs varied from 16 to 37 weight percent.

The determination of the percent of silicon fed that is discarded and the usable methylchlorosilanes in the crude are described in Example 3, supra. The use of sand effected an average reduction of silicon discarded of approximately 64 weight percent, compared to the silicon discarded in the runs in which sand was not utilized. At the same time, the percent usable methylchlorosilane content of the crude product was maintained at between 87 and 90 weight percent in both runs in which sand was added and in which sand was not added.

These above results demonstrate that in using sand in a fluid bed reactor in the preparation of methylchlorosilanes via the direct reaction of methyl chloride with silicon the silicon utilization is improved when sand is added to the silicon, copper-containing catalyst, and other catalytic additives in the fluid bed reactor. Further, the usable methylchlorosilane content of the crude reaction product from runs in which sand is added to the solid reaction mixture in the fluid bed reactor is maintained, compared to the runs in which sand was not utilized.

Example 5: A series of runs to produce methylchlorosilanes from the reaction of methyl chloride and silicon was made in a commercial-scale reactor that was approximately 50 percent larger in diameter than the reactor utilized in Example 4. The same raw materials were used; however, sands of two different particle size distributions were utilized. The two sand materials used were both purchased from Ottawa Industrial Sand Company. The first sand material was Ottawa #295, also known as Sil-Co-sil. The sand had a median particle size of 21 microns. The second sand material was Ottawa #270, a sand with a median particle size of 42 microns.

A series of runs was made in which the direct reaction to produce methylchlorosilanes in a fluid bed reactor was evaluated with and without the addition of sand to the fluid bed reactor. 8 runs were carried out in which no sand was added. 7 runs were then carried out in which Ottawa #295 or Ottawa #270 sand was added. In the 7 runs in which sand was added to the fluid bed reactor the sand content of the solids in the fluid bed reactor was maintained at approximately 7 to 14 weight percent.

The determination of the percent of silicon fed that is discarded and the usbale methylchlorosilanes in the crude are described in Example 3, supra. The use of sand effected an average reduction of silicon discarded of approximately 28 weight percent, compared to the silicon discarded in the runs in which sand was not utilized. At the same time the percent usable methylchlorosilane content of the crude product was maintained at between 87 and 88 weight percent in both runs in which sand was added and in which sand was not added.

The individual runs of the sand trials can be viewed as to the significance of sand particle size and sand loading upon the reduction, compared to the standard runs in which sand was not utilized, of the weight percent of silicon discarded. Table 3 is a summary of these 7 runs. These 7 runs are designated as Samples D through J. In Table 3, silicon particle size, in microns, is designated as "Microns"; sand loading, as weight percent of the total bed of solids in the fluid bed reactor, is designated as "%Sand"; and percent reduction of silicon discarded, compared to the runs without sand is designated as "% Si Redn.".

## Table 3

| Sample | Microns | %Sand | %Si Redn. |
|--------|---------|-------|-----------|
| D | 21 | 7 | 24.4 |
| E | 21 | 7 | 39.5 |
| F | 21 | 14 | 26.7 |
| G | 21 | 14 | 14.0 |
| H | 42 | 14 | 20.9 |
| I | 42 | 14 | 27.9 |
| J | 42 | 14 | 41.9 |

These above results again demonstrate the beneficial effect upon silicon utilization that results in the addition of sand to the fluid bed reactor in the direct reaction of silicon and methyl chloride to produce methylchlorosilanes. Further, the above results demonstrate that the addition of sand to the fluid bed reactor has a beneficial effect in different sized fluid bed reactors. Finally, within the range of sand particle sizes and sand loadings studied, these two factors have no apparent effect upon the percentage of total silicon fed that is discarded.

## Claims

1. A process for preparing organohalosilanes comprising effecting reaction between an organic halide and powdered silicon in the presence of an effective amount of copper-containing material and other catalytic additives in a fluid bed reactor characterised in that the powdered silicon, the copper-containing material, and the other catalytic additives are mixed with a powdered, inert solid, said inert solid comprising at least 5 weight percent of the combined solids, and said inert solid having a particle size distribution which is suitable for a fluid bed reactor.

2. A process according to Claim 1, wherein the organic halide is an alkyl halide, and the organohalosilanes are alkylhalosilanes.

3. A process according to Claim 2, wherein the alkyl halide is methyl chloride, and the alkylhalosilanes are methylchlorosilanes.

4. A process according to Claim 1, wherein the inert solid ranges between 5 and 40 weight percent of the combined solids.

5. A process according to Claim 4, wherein the inert solid ranges between 10 and 20 weight percent of the combined solids.

6. A process according to Claim 1, wherein the inert solid is sand.

**Patentansprüche**

1. Verfahren zum Herstellen von Organohalosilanen durch Bewirken einer Umsetzung zwischen einem organischen Halid und pulverförmigem Silizium in Gegenwart einer wirksamen Menge kupferhaltigen Materials und anderer katalytischer Zusätze in einem Fließbettreaktor,
   **dadurch gekennzeichnet**,
   daß das pulverförmige Silizium, das kupferhaltige Material und die anderen katalytischen Zusätze mit einem pulverförmigen, inerten Feststoff gemischt werden, wobei der inerte Feststoff mindestens 5 Gew.-% der kombinierten Feststoffe ausmacht und der inerte Feststoff eine für einen Fließbettreaktor geeignete Teilchengrößenverteilung aufweist.

2. Verfahren nach Anspruch 1,
   **dadurch gekennzeichnet**,
   daß das organische Halid ein Alkylhalid ist und die Organohalosilane Alkylhalosilane sind.

3. Verfahren nach Anspruch 2,
   **dadurch gekennzeichnet**,
   daß das Alkylhalid Methylchlorid und die Alkylhalosilane Methylchlorsilane sind.

4. Verfahren nach Anspruch 1,
   **dadurch gekennzeichnet,**
   daß die Menge des inerten Feststoffes im Bereich zwischen 5 und 40 Gew.-% der kombinierten Feststoffe liegt.

5. Verfahren nach Anspruch 4,
   **dadurch gekennzeichnet**,
   daß die Menge des inerten Feststoffes im Bereich zwischen 10 und 20 Gew.-% der kombinierten Feststoffe liegt.

6. Verfahren nach Anspruch 1,
   **dadurch gekennzeichnet**,
   daß der inerte Feststoff Sand ist.

**Revendications**

1. Un procédé de préparation d'organohalogénosilanes qui consiste à faire réagir un halogénure organique et du silicium en poudre en présence d'une quantité efficace de matière contenant du cuivre et d'autres additifs catalytiques dans un réacteur à lit fluidisé, caractérisé en ce que le silicium en poudre, la matière contenant du cuivre et les autres additifs catalytiques sont mélangés avec une matière solide inerte en poudre, ladite matière solide inerte constituant au moins 5% en poids des matières solides totales, et ladite matière solide inerte présentant une répartition granulométrique qui est appropriée pour un réacteur à lit fluidisé.

2. Un procédé selon la revendication 1, dans lequel l'halogénure organique est un halogénure d'alkyle et les organohalogénosilanes sont des alkylhalogénosilanes.

3. Un procédé selon la revendication 2, dans lequel l'halogénure d'alkyle et le chlorure de méthyle, et les alkylhalogénosilanes sont des méthylchlorosilanes.

4. Un procédé selon la revendication 1, dans lequel la matière solide inerte constitue entre 5 et 40% en poids des matières solides totales.

5. Un procédé selon la revendication 4, dans lequel la matière solide inerte constitue entre 10 et 20% en poids des matières solides totales.

6. Un procédé selon la revendication 1, dans lequel la matière solide inerte est du sable.

A PROCESS FOR PREPARING HALOSILANES

Fig. 1